(19) Europäisches Patentamt
European Patent Office
Office européen des brevets

(11) **EP 2 985 999 A1**

(12) **EUROPEAN PATENT APPLICATION**
published in accordance with Art. 153(4) EPC

(43) Date of publication:
**17.02.2016 Bulletin 2016/07**

(51) Int Cl.:
*H04N 19/50* (2014.01)   *H04N 13/00* (2006.01)

(21) Application number: **14783381.8**

(86) International application number:
**PCT/KR2014/003078**

(22) Date of filing: **09.04.2014**

(87) International publication number:
**WO 2014/168411 (16.10.2014 Gazette 2014/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **11.04.2013   US 201361810715 P**
**18.07.2013   US 201361856033 P**

(71) Applicant: **LG Electronics Inc.**
**Seoul 150-721 (KR)**

(72) Inventors:
• **NAM, Junghak**
**Seoul 137-893 (KR)**

• **YEA, Sehoon**
**Seoul 137-893 (KR)**
• **KIM, Taesup**
**Seoul 137-893 (KR)**
• **JUNG, Jiwook**
**Seoul 137-893 (KR)**
• **HEO, Jin**
**Seoul 137-893 (KR)**

(74) Representative: **Diehl & Partner GbR**
**Patentanwälte**
**Erika-Mann-Strasse 9**
**80636 München (DE)**

(54) **METHOD AND APPARATUS FOR PROCESSING VIDEO SIGNAL**

(57)     A video signal processing method according to the present invention comprises: obtaining a depth prediction value of a current block; recovering a depth residual per sample of the current block according to an SDC mode indicator; and recovering a depth value of the current block using the depth prediction value and the recovered depth residual. The present invention adaptively uses an SDC mode according to an SDC mode indicator and further uses an SDC mode and/or depth lookup table, thereby increasing encoding efficiency for depth data.

## FIG. 3

**Description**

[Technical Field]

The present invention relates to a method and apparatus for coding video signals.

[Background Art]

Compression refers to a signal processing technique for transmitting digital information through a communication line or storing the digital information in a form suitable for a storage medium. Subjects of compression include audio, video and text information. Particularly, a technique of compressing images is called video compression. Multiview video has characteristics of spatial redundancy, temporal redundancy and inter-view redundancy.

[Disclosure]

[Technical Problem]

An object of the present invention is to improve coding efficiency of a video signal, particularly, depth data.

[Technical Solution]

To accomplish the object, the present invention obtains depth prediction values of a current block, restores a depth residual per sample of the current block according to an SDC mode indicator and restores depth values of the current block using the depth prediction values and the restored depth residual.

The SDC mode indicator according to the present invention refers to a flag indicating whether the current block is coded in an SDC mode, and the SDC mode refers to a method of coding depth residuals for a plurality of samples included in the current block into one depth residual.

When the SDC mode indicator according to the present invention indicates that the current block is coded in the SDC mode, the depth residual of the current block is restored using residual coding information.

The residual coding information according to the present invention includes the absolute value of a depth residual and sign information of the depth residual.

The depth residual according to the present invention refers to a difference between a mean value of the depth values of the current block and a mean value of the depth prediction values of the current block.

The depth residual according to the present invention refers to a mean value of a depth residual of an i-th sample of the current block, derived from a difference between a depth value of the i-th sample and a depth prediction value of the i-th sample.

When the SDC mode indicator according to the present invention indicates that the current block is coded in the SDC mode, the depth residual is restored using a depth lookup table.

The depth residual according to the present invention is restored by deriving a residual index using the absolute value and the sign information of the depth residual, obtaining a depth prediction mean value of the current block, obtaining a prediction index using the depth prediction mean value and the depth lookup table, obtaining a table depth value corresponding to an index derived from the sum of the prediction index and the residual index, from the depth lookup table and obtaining a difference between the obtained table depth value and the depth prediction mean value.

The prediction index according to the present invention is set to a table index allocated to a table depth value which minimizes differences between the depth prediction mean value and table depth values in the depth lookup table.

[Advantageous Effects]

The video signal processing method and apparatus according to the present invention have the following advantages.

According to at least one embodiment of the present invention, it is possible to improve depth data coding efficiency by adaptively using an SDC mode using an SDC mode indicator.

According to at least one embodiment of the present invention, it is possible to code one depth residual instead of depth residuals for all samples in the current block in the SDC mode and to improve depth residual coding efficiency by skipping inverse quantization and inverse transform processes.

According to at least one embodiment of the present invention, is possible to reduce errors caused by rounding operation by calculating differences between depth values of the current block and depth prediction values of the current block and then calculating the mean thereof.

According to at least one embodiment of the present invention, is possible to reduce the number of bits necessary to code depth data by converting depth values into indices using a depth lookup table.

[Description of Drawings]

FIG. 1 is a block diagram of a video decoder 100 according to an embodiment to which the present invention is applied.

FIG. 2 is a block diagram of a broadcast receiver to which the video decoder is applied according to an embodiment of the present invention.

FIG. 3 is a flowchart illustrating a process of restoring a depth value of a current block according to an embodiment to which the present invention is applied.

FIG. 4 illustrates a method of encoding residual coding information when a depth lookup table is not used according to an embodiment to which the present invention is applied.

FIG. 5 is a flowchart illustrating a method of obtaining a depth residual of the current block using residual coding information when the depth lookup table is not used according to an embodiment to which the present invention is applied.

FIG. 6 illustrates a method of encoding residual coding information when the depth lookup table is used according to an embodiment to which the present invention is applied.

FIG. 7 illustrates a method of restoring a depth residual using residual coding information when the depth lookup table is used according to an embodiment to which the present invention is applied.

[Best Mode]

To accomplish the object of the present invention, a method for processing a video signal according to the present invention includes: obtaining depth prediction values of a current block; restoring a depth residual per sample of the current block according to an SDC mode indicator; and restoring depth values of the current block using the depth prediction values and the restored depth residual.

The SDC mode indicator according to the present invention may refer to a flag indicating whether the current block is coded in an SDC mode, and the SDC mode may refer to a method of coding depth residuals for a plurality of samples included in the current block into one depth residual.

When the SDC mode indicator according to the present invention indicates that the current block is coded in the SDC mode, the depth residual of the current block may be restored using residual coding information.

The residual coding information according to the present invention may include the absolute value of a depth residual and sign information of the depth residual.

The depth residual according to the present invention may refer to a difference between a mean value of the depth values of the current block and a mean value of the depth prediction values of the current block.

The depth residual according to the present invention may refer to a mean value of a depth residual of an i-th sample of the current block, derived from a difference between a depth value of the i-th sample and a depth prediction value of the i-th sample.

When the SDC mode indicator according to the present invention indicates that the current block is coded in the SDC mode, the depth residual may be restored using a depth lookup table.

The depth residual according to the present invention may be restored by deriving a residual index using the absolute value and the sign information of the depth residual, obtaining a depth prediction mean value of the current block, obtaining a prediction index using the depth prediction mean value and the depth lookup table, obtaining a table depth value corresponding to an index derived from the sum of the prediction index and the residual index, from the depth lookup table, and obtaining a difference between the obtained table depth value and the depth prediction mean value.

The prediction index according to the present invention may be set to a table index allocated to a table depth value which minimizes differences between the depth prediction mean value and table depth values in the depth lookup table.

[Modes for Invention]

Description will now be given in detail according to exemplary embodiments disclosed herein, with reference to the accompanying drawings. Prior to describing the present invention, it is to be noted that most terms disclosed in the present invention correspond to general terms well known in the art, but some terms have been selected by the applicant as necessary and will hereinafter be disclosed in the following description of the present invention. Therefore, it is preferable that the terms defined by the applicant be understood on the basis of their meanings in the present invention. The embodiments described in the specification and features shown in the drawings are therefore to be construed in all aspects as illustrative and not restrictive. The scope of the invention should be determined by the appended claims and their legal equivalents, not by the above description, and all changes coming within the meaning and equivalency range of the appended claims are intended to be embraced therein.

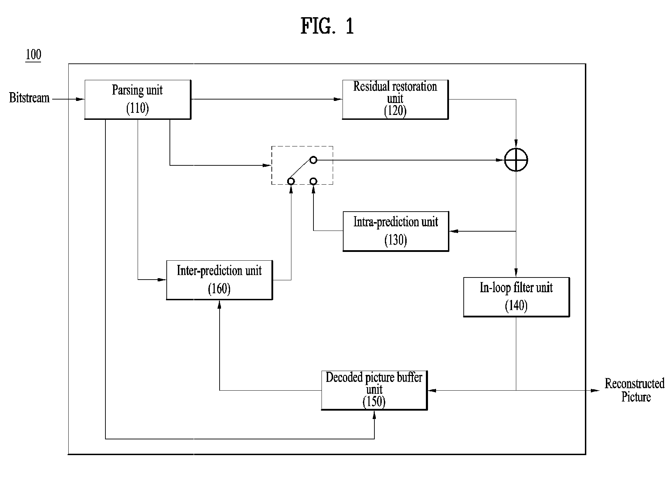

FIG. 1 is a block diagram of a video decoder 100 according to an embodiment to which the present invention is applied.

Referring to FIG. 1, the video decoder may 100 include a parsing unit 110, a residual restoration unit 120, an intra-prediction unit 130, an in-loop filter unit 140, a decoded picture buffer unit 150 and an inter-prediction unit 160.

The parsing unit 100 may receive a bitstream including multiview texture data. In addition, the parsing unit 100 may further receive a bitstream including depth data when the depth data is necessary for texture data coding. The input texture data and depth data may be transmitted as one bitstream or transmitted as separate bitstreams. When the received bitstream is multiview related data (e.g., 3-dimensional video), the bitstream may further include camera parameters. The camera parameters may include an intrinsic camera parameter and an extrinsic camera parameter, and the intrinsic camera parameter may include a focal length, an aspect ratio, a principal point and the like and the extrinsic camera parameter may include camera position information in the global coordinate system and the like.

The parsing unit 110 may perform parsing on an NAL basis in order to decode the input bitstream to extract coding information (e.g., block partition information, intra-prediction mode, motion information, reference index and the like) for video image prediction and coding information (e.g., quantized transform coefficient, the absolute value of a depth residual, sign information of the depth residual and the like) corresponding to residual data of video.

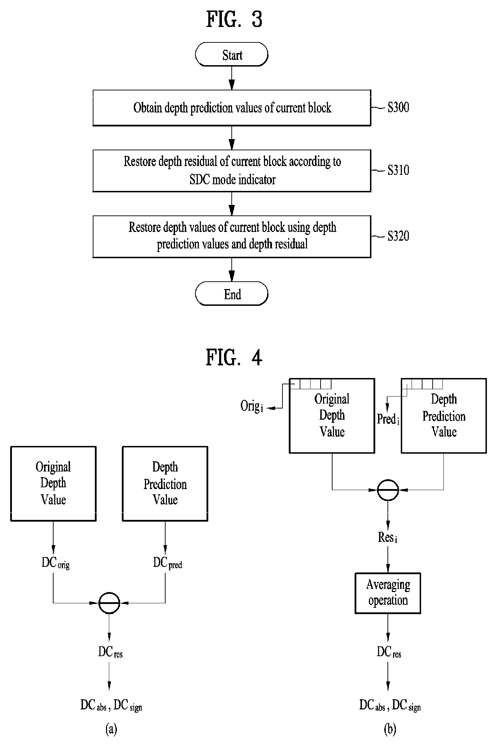

The residual restoration unit 120 may scale a quantized transform coefficient using a quantization parameter to as to obtain a scaled transform coefficient and inversely transform the scaled transform coefficient to restore residual data. Alternatively, the residual restoration unit 120 may restore residual data using the absolute value of a depth residual and sign information of the depth residual, which will be described later with reference to FIGS. 3 to 7. A quantization parameter for a depth block may be set in consideration of complexity of the texture data. For example, a low quantization parameter can be set when a texture block corresponding to the depth block has a high complexity and a high quantization parameter can be set when the texture block has a low complexity. The complexity of the texture block may be determined on the basis of a difference value between neighboring pixels in a reconstructed texture picture, as represented by Equation 1.

[Equation 1]

$$E = \frac{1}{N} \sum_{(x,y)} \left[ \left| C_{(x,y)} - C_{(x-1,y)} \right| + \left| C_{(x,y)} - C_{(x+1,y)} \right| \right]^2$$

In Equation 1, E denotes the complexity of texture data, C denotes reconstructed texture data and N denotes the number of pixels in a texture data region for which complexity will be calculated. Referring to Equation 1, the complexity of texture data can be calculated using a difference value between texture data corresponding to the point (x, y) and texture data corresponding to the point (x-1, y) and a difference value between the texture data corresponding to the point (x, y) and texture data corresponding to the point (x+1, y). In addition, complexity can be calculated for each of the texture picture and texture block and the quantization parameter can be derived using the complexity, as represented by Equation 2.

[Equation 2]

$$QP = \min(\max(\alpha \log_2 \frac{E_f}{E_b}, -\beta), \beta)$$

Referring to Equation 2, the quantization parameter for the depth block can be determined on the basis of the ratio of the complexity of the texture picture to the complexity of the texture block. In Equation 2, $\alpha$ and $\beta$ may be variable integers derived by the decoder or may be integers predetermined in the decoder.

The intra-prediction unit 130 may perform intra-prediction using neighboring samples of the current block and an intra-prediction mode. Here, the neighboring samples correspond to a left sample, a left lower sample, an upper sample and a right upper sample of the current block and may refer to samples which have been restored prior to the current block. The intra-prediction mode may be extracted from a bitstream and derived on the basis of the intra-prediction mode of at least one of a left neighboring block and an upper neighboring block of the current block. An intra-prediction mode of a depth block may be derived from an intra-prediction mode of a texture block corresponding to the depth block.

The inter-prediction unit 160 may perform motion compensation of a current block using reference pictures and motion information stored in the decoded picture buffer unit 150. The motion information may include a motion vector and reference index information in a broad sense in the specification. In addition, the inter-prediction unit 160 may perform temporal inter-prediction for motion compensation. Temporal inter-prediction may refer to inter-prediction using a reference picture, which corresponds to the same view as the current block while corresponding to a time different from that of the current block. In the case of a multiview image captured by a plurality of cameras, inter-view inter-prediction may be performed in addition to temporal inter-prediction. Inter-view inter-prediction may refer to inter-prediction using a reference picture corresponding to a view different from that of the current block.

The in-loop filter unit 140 may apply an in-loop filter to each coded block in order to reduce block distortion. The filter may smooth the edge of a block so as to improve the quality of a decoded picture. Filtered texture pictures or depth pictures may be output or stored in the decoded picture buffer unit 150 to be used as reference pictures. When texture data and depth data are coded using the same in-loop filter, coding efficiency may be deteriorated since the texture data and the depth data have different characteristics. Accordingly, a separate in-loop filter for the depth data may be defined. A description will be given of a region-based adaptive loop filter and a trilateral loop filter as in-loop filtering methods capable of efficiently coding the depth data.

In the case of the region-based adaptive loop filter, it can be determined whether the region-based adaptive loop filter is applied on the basis of a variance of a depth block. The variance of the depth block can be defined as a difference between a maximum pixel value and a minimum pixel value in the depth block. It is possible to determine whether the filter is applied by comparing the variance of the depth block with a predetermined threshold value. For example, when the variance of the depth block is greater than or equal to the predetermined threshold value, which means that the difference between the maximum pixel value and the minimum pixel value in the depth block is large, it can be determined that the region-based adaptive loop filter is applied. On the contrary, when the variance of the depth block is less than the predetermined threshold value, it can be determined that the region-based adaptive loop filter is not applied. When the region-based adaptive loop filter is applied according to the comparison result, pixel values of the filtered depth block may be derived by applying a predetermined weight to neighboring pixel values. Here, the predetermined weight can be determined on the basis of a position difference between a currently filtered pixel and a neighboring pixel and/or a difference value between the currently filtered pixel value and the neighboring pixel value. The neighboring pixel value may refer to one of pixel values other than the currently filtered pixel value from among pixel values included in the depth block.

The trilateral loop filter is similar to the region-based adaptive loop filter but is distinguished from the region-based adaptive loop filter in that the former additionally considers texture data. Specifically, the trilateral loop filter can extract depth data of neighboring pixels which satisfy the following three conditions.

$$\text{Condition 1. } |p - q| \leq \sigma 1$$

$$\text{Condition 2. } |D(p) - D(q)| \leq \sigma 2$$

$$\text{Condition 3. } |V(p) - V(q)| \leq \sigma 3$$

Condition 1 compares a position difference between a current pixel p and a neighboring pixel q in the depth block with a predetermined parameter , Condition 2 compares a difference between depth data of the current pixel p and depth data of the neighboring pixel q with a predetermined parameter and Condition 3 compares a difference between texture data of the current pixel p and texture data of the neighboring pixel q with a predetermined parameter. The trilateral loop filter can extract neighboring pixels which satisfy the three conditions and filter the current pixel p with the median or average of depth data of the neighboring pixels.

The decoded picture buffer unit 150 may store or open previously coded texture pictures or depth pictures in order to perform inter-prediction. To store previously coded texture pictures or depth pictures in the decoded picture buffer unit 150 or to open the pictures, frame_num and a picture order count (POC) of each picture may be used. Furthermore, since the previously coded pictures include depth pictures corresponding to viewpoints different from the viewpoint of the current depth picture in depth coding, viewpoint identification information for identifying a depth picture viewpoint may be used in order to use the depth pictures corresponding to different viewpoints as reference pictures. The decoded picture buffer unit 150 may manage reference pictures using an adaptive memory management control operation method and a sliding window method in order to achieve inter-prediction more flexibly. This enables a reference picture memory and a non-reference picture memory to be united into one memory so as to achieve efficient management of a small memory. In depth coding, depth pictures may be marked to be discriminated from texture pictures in the decoded picture buffer unit and information for identifying each depth picture may be used during the marking process.

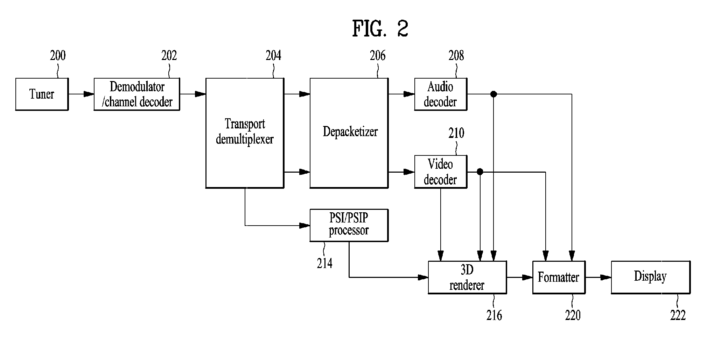

FIG. 2 is a block diagram of a broadcast receiver to which the video decoder is applied according to an embodiment to which the present invention is applied.

The broadcast receiver according to the present embodiment receives terrestrial broadcast signals to reproduce images. The broadcast receiver can generate three-dimensional content using received depth related information. The broadcast receiver includes a tuner 200, a demodulator/channel decoder 202, a transport demultiplexer 204, a depacketizer 206, an audio decoder 208, a video decoder 210, a PSI/PSIP processor 214, a 3D renderer 216, a formatter 220 and a display 222.

The tuner 200 selects a broadcast signal of a channel tuned to by a user from among a plurality of broadcast signals input through an antenna (not shown) and outputs the selected broadcast signal.

The demodulator/channel decoder 202 demodulates the broadcast signal from the tuner 200 and performs error correction decoding on the demodulated signal to output a transport stream TS.

The transport demultiplexer 204 demultiplexes the transport stream so as to divide the transport stream into a video PES and an audio PES and extract PSI/PSIP information.

The depacketizer 206 depacketizes the video PES and the audio PES to restore a video ES and an audio ES.

The audio decoder 208 outputs an audio bitstream by decoding the audio ES. The audio bitstream is converted into an analog audio signal by a digital-to-analog converter (not shown), amplified by an amplifier (not shown) and then output through a speaker (not shown).

The video decoder 210 decodes the video ES to restore the original image. The decoding processes of the audio decoder 208 and the video decoder 210 can be performed on the basis of a packet ID (PID) confirmed by the PSI/PSIP processor 214. During the decoding process, the video decoder 210 can extract depth information. In addition, the video decoder 210 can extract additional information necessary to generate an image of a virtual camera view, for example, camera information or information for estimating an occlusion hidden by a front object (e.g. geometrical information such as object contour, object transparency information and color information), and provide the additional information to the 3D renderer 216. However, the depth information and/or the additional information may be separated from each other by the transport demultiplexer 204 in other embodiments of the present invention.

The PSI/PSIP processor 214 receives the PSI/PSIP information from the transport demultiplexer 204, parses the PSI/PSIP information and stores the parsed PSI/PSIP information in a memory (not shown) or a register so as to enable broadcasting on the basis of the stored information.

The 3D renderer 216 can generate color information, depth information and the like at a virtual camera position using the restored image, depth information, additional information and camera parameters. In addition, the 3D renderer 216 generates a virtual image at the virtual camera position by performing 3D warping using the restored image and depth information regarding the restored image. While the 3D renderer 116 is configured as a block separated from the video decoder 210 in the present embodiment, this is merely an exemplary and the 3D renderer 216 may be included in the video decoder 210.

The formatter 220 formats the image restored in the decoding process, that is, the actual image captured by a camera, and the virtual image generated by the 3D renderer 216 according to the display mode of the broadcast receiver such that a 3D image is displayed through the display 222. Here, synthesis of the depth information and virtual image at the virtual camera position by the 3D renderer 216 and image formatting by the formatter 220 may be selectively performed in response to a user command. That is, the user may manipulate a remote controller (not shown) such that a composite image is not displayed and designate an image synthesis time.

As described above, the depth information for generating the 3D image is used by the 3D renderer 216. However, the depth information may be used by the video decoder 210 in other embodiments. A description will be given of various embodiments in which the video decoder 210 uses the depth information.

FIG. 3 is a flowchart illustrating a process of restoring depth values of a current block according to an embodiment to which the present invention is applied.

Referring to FIG. 3, depth prediction values of the current block may be obtained (S300). Specifically, when the current block has been coded in an intra mode, the depth prediction values of the current block can be obtained using neighboring samples of the current block and an intra-prediction mode of the current block. Here, the intra-prediction mode may include a planar mode, a DC mode and an angular mode. When the current block has been coded in an inter mode, the depth prediction values of the current block can be obtained using motion information of the current block and a reference picture.

A depth residual may be restored per sample of the current block according to an SDC mode indicator (S310).

The SDC mode indicator can refer to a flag that indicates whether the current block is coded in an SDC mode. The SDC mode can refer to a method of coding depth residuals for a plurality of samples in the current block into one residual. Only when the current block is not coded in a skip mode, the depth residual can be restored. This is because the skip mode does not involve residual data.

Specifically, when the SDC mode indicator indicates that the current block is not coded in the SDC mode, a quantized transform coefficient can be obtained from a bitstream. The obtained quantized transform coefficient can be scaled using a quantization parameter and inversely transformed to restore a depth residual.

When the SDC mode indicator indicates that the current mode is coded in the SDC mode, depth residuals of the current block can be restored using residual coding information. The residual coding information may include the absolute values of depth residuals and code information of the depth residuals. The residual coding information is described in a case in which coding is performed without using a depth lookup table (DLT) and a case in which coding is performed using the depth lookup table. The depth lookup table is used to allocate an index corresponding to a depth value to the depth value and to code the index instead of directly coding the depth value, thereby improving coding efficiency. Accordingly, the depth lookup table may be a table that defines table depth values and table indices respectively corresponding to the table depth values. The table depth values may include at least one depth value that covers a minimum depth residual value and a maximum depth residual value of the current block. In addition, the table depth values may be coded in an encoder and transmitted through a bitstream, and predetermined values in a decoder may be used as the table depth values.

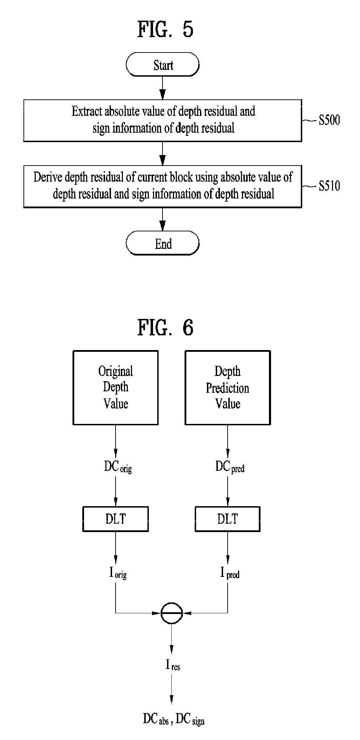

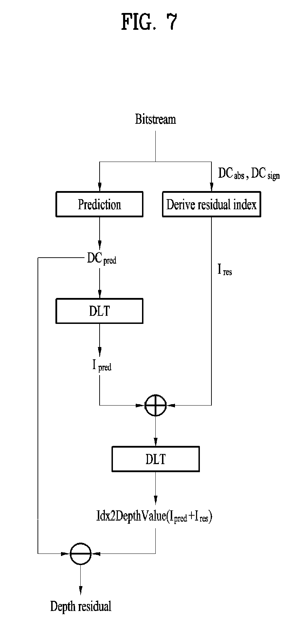

A description will be given of a method of encoding residual coding information and a method of restoring depth residuals using the residual coding information when the depth lookup table is not used with reference to FIGS. 4 and 5. In addition, a method of encoding the residual coding information and a method of restoring the depth residuals using the residual coding information when the depth lookup table is used will be described with reference to FIGS. 6 and 7.

The depth values of the current block may be restored using the depth prediction values obtained in step S300 and the depth residuals restored in step S310 (S320). For example, the depth values of the current block can be derived from the sum of the depth prediction values and the depth residuals. In addition, the depth value of the current block can be derived per sample.

FIG. 4 illustrates a method of encoding the residual coding information when the depth lookup table is not used according to an embodiment to which the present invention is applied.

1. First method

The first method according to the present invention obtains a depth residual of the current block by calculating the mean of the original depth values of the current block and the mean of the depth prediction values of the current block and then calculating a difference between the means.

Referring to FIG. 4(a), a mean value DCorig of the original depth values of the current block is obtained and a mean value DCpred of the depth prediction values of the current block is obtained. A depth residual DCres is obtained by calculating a difference between the mean value of the original depth values and the mean value of the depth prediction values. The depth residual can be coded into the absolute value DCabs of the depth residual and sign information DCsign of the depth residual and transmitted to a decoder.

2. Second method

The second method according to the present invention obtains a depth residual of the current block by calculating differences between the original depth values and depth prediction values of the current block and then calculating the mean of the differences.

Referring to FIG. 4(b), a depth residual of an i-th sample of the current block can be obtained by calculating a difference between the original depth value Origi of the i-th sample of the current block and a depth prediction value Predi of the i-th sample, which corresponds to the original depth value Origi. When the current block is an NxN block, i is equal to or greater than 0 and equal to or less than N2-1 and can specify the position of the corresponding sample. A depth residual DCres of the current block can be obtained through averaging operation performed on N2 depth residuals. The depth residual can be coded into the absolute value DCabs and sign information of the depth residual and transmitted to the decoder.

As described above, averaging operation can be used to code depth residuals of the current block into one depth residual in the SDC mode. However, the present invention is not limited thereto and one depth residual can be obtained from a maximum value, a minimum value or a mode from among a plurality of depth residuals of the current block.

FIG. 5 is a flowchart illustrating a method of obtaining a depth residual of the current block using the residual coding information when the depth lookup table is not used according to an embodiment to which the present invention is applied.

The absolute value of a depth residual and sign information of the depth residual may be extracted from a bitstream (S500).

A depth residual of the current block may be derived using the absolute value and the sign information of the depth residual, extracted in step S500 (S510). Here, when the absolute value and the sign information of the depth residual have been coded according to the first method described with reference to FIG. 4, the depth residual can be defined as a difference between the mean value of the original depth values of the current block and the mean value of the depth prediction values of the current block. When the absolute value and the sign information of the depth residual have been coded according to the second method described with reference to FIG. 4, the depth residual can be defined as a mean value of the depth residual of the i-th sample of the current block, obtained from the difference between the depth value of the i-th sample and the depth prediction value of the i-th sample.

FIG. 6 illustrates a method of encoding the residual coding information when the depth lookup table is used according to an embodiment to which the present invention is applied.

Referring to FIG. 6, a depth mean value DCorig of the current block can be obtained. Here, the depth mean value can refer to a mean value of depth values of a plurality of samples included in the current block.

A depth index Iorig can be obtained using the depth mean value DCorig and the depth lookup table of the current block.

Specifically, a table depth value in the depth lookup table, which corresponds to the depth mean value DCorig, can be determined. The determined table depth value can refer to a table depth value that minimizes differences between the depth mean value DCorig and table depth values in the depth lookup table. A table index assigned to the determined table depth value can be set as the depth index Iorig.

Depth prediction values of the current block can be obtained. The depth prediction values can be obtained in one of the intra mode and the inter mode. A mean value (referred to as a depth prediction mean value DCpred hereinafter) of depth prediction values of the plurality of samples included in the current block can be obtained.

A prediction index Ipred can be obtained using the depth prediction mean value DCpred and the depth lookup table of the current block. Specifically, a table depth value in the depth lookup table, which corresponds to the depth prediction mean value DCpred, can be determined. The determined table depth value may refer to a table depth value that minimize differences between the depth prediction mean value DCpred and the table depth values in the depth lookup table. A table index allocated to the determined table depth value can be set as the prediction index Ipred.

Subsequently, a residual index Ires between the depth index Iorig and the prediction index Ipred can be obtained. The residual index Ires can be encoded into residual coding information including the absolute value DCabs of a depth residual and sign information DCsign of the depth residual as in the case in which the depth lookup table is not used. The absolute value of the depth residual can refer to the absolute value of the residual index Ires and the sign information of the depth residual can refer to the sign of the residual index Ires. In other words, the depth residual can be coded into a value of a sample domain when the depth lookup table is not used, whereas the depth residual can be coded into a value of an index domain when the depth lookup table is used.

FIG. 7 illustrates a method of restoring a depth residual using residual coding information when the depth lookup table is used according to an embodiment to which the present invention is applied.

Residual coding information can be obtained from a bitstream. The residual coding information may include the absolute value DCabs of a depth residual and sign information DCsign of the depth residual. The residual index Ires can be derived using the absolute value DCabs of the depth residual and the sign information DCsign of the depth residual.

Coding information (e.g., intra-prediction mode, motion information and the like) for predicting the current block can be further obtained from the bitstream. Depth prediction values of respective samples of the current block can be obtained using the coding information and a mean value of the obtained depth prediction values, that is, a depth prediction mean value DCpred, can be acquired.

A prediction index Ipred can be obtained using the depth prediction mean value DCpred and the depth lookup table of the current block. Here, the prediction index Ipred can be set as a table index allocated to a table depth value that minimizes differences between the depth prediction mean value DCpred and table depth values in the depth lookup table, as described above with reference to FIG. 6.

Subsequently, a depth residual can be restored using the prediction index Ipred, the residual index Ires and the depth lookup table.

For example, a table depth value (Idx2DepthValue (Ipred + Ires)) corresponding to an index derived from the sum of the prediction index Ipred and the residual index Ires can be obtained from the depth lookup table. The depth residual of the current block can be restored using the difference between the obtained table depth value and the depth prediction mean value DCpred.

Above-described embodiments are combinations of elements and features of the present invention. The elements or features may be considered selective unless otherwise mentioned. Each element or feature may be practiced without being combined with other elements or features. Further, an embodiment of the present invention may be constructed by combining parts of the elements and/or features. Operation orders described in embodiments of the present invention may be rearranged. Some constructions of any one embodiment may be included in another embodiment and may be replaced with corresponding constructions of another embodiment.

[Industrial Applicability]

The present invention can be used to encode or decode video signals.

**Claims**

1. A method for processing a video signal, comprising:

   obtaining depth prediction values of a current block;
   restoring a depth residual per sample of the current block according to an SDC mode indicator; and
   restoring depth values of the current block using the depth prediction values and the restored depth residual,
   wherein the SDC mode indicator refers to a flag indicating whether the current block is coded in an SDC mode,
   and the SDC mode refers to a method of coding depth residuals for a plurality of samples included in the current
   block into one depth residual.

2. The method according to claim 1, wherein, when the SDC mode indicator indicates that the current block is coded
   in the SDC mode, the restoring of the depth residual comprises:

   extracting residual coding information from a bitstream; and
   deriving a depth residual of the current block using the extracted residual coding information,
   wherein the residual coding information includes the absolute value of a depth residual and sign information of
   the depth residual.

3. The method according to claim 2, wherein the derived depth residual refers to a difference between a mean value
   of the depth values of the current block and a mean value of the depth prediction values of the current block.

4. The method according to claim 2, wherein the derived depth residual refers to a mean value of a depth residual of
   an i-th sample of the current block, derived from a difference between a depth value of the i-th sample and a depth
   prediction value of the i-th sample.

5. The method according to claim 1, wherein, when the SDC mode indicator indicates that the current block is coded
   in the SDC mode, the depth residual is restored using a depth lookup table.

6. The method according to claim 5, wherein the restoring of the depth residual comprises:

   obtaining residual information from a bitstream, the residual coding information including the absolute value of
   a depth residual and sign information of the depth residual;
   deriving a residual index using the absolute value and the sign information of the depth residual;
   obtaining a depth prediction mean value of the current block, the depth prediction mean value referring to a
   mean value of the obtained depth prediction values;
   obtaining a prediction index using the depth prediction mean value and the depth lookup table;
   obtaining a table depth value corresponding to an index derived from the sum of the prediction index and the
   residual index, from the depth lookup table; and
   restoring the depth residual of the current block from a difference between the obtained table depth value and
   the depth prediction mean value.

7. The method according to claim 6, wherein the prediction index is set to a table index allocated to a table depth value
   which minimizes differences between the depth prediction mean value and table depth values in the depth lookup
   table.

8. A device for processing a video signal, comprising:

   an inter-prediction unit for obtaining depth prediction values of a current block;
   a residual restoration unit for restoring a depth residual per sample of the current block according to an SDC mode indicator; and

a depth restoration unit for restoring depth values of the current block using the depth prediction values and the restored depth residual,

wherein the SDC mode indicator refers to a flag indicating whether the current block is coded in an SDC mode, and the SDC mode refers to a method of coding depth residuals for a plurality of samples included in the current block into one depth residual.

FIG. 1

FIG. 2

Tuner — 200

Demodulator /channel decoder — 202

Transport demultiplexer — 204

Depacketizer — 206

PSI/PSIP processor — 214

Audio decoder — 208

Video decoder — 210

3D renderer — 216

Formatter — 220

Display — 222

## FIG. 3

```
          ┌─────────────┐
          │    Start     │
          └──────┬──────┘
                 │
                 ▼
┌────────────────────────────────────────────┐
│  Obtain depth prediction values of current block │ ── S300
└────────────────────┬───────────────────────┘
                     │
                     ▼
┌────────────────────────────────────────────┐
│  Restore depth residual of current block according to │ ── S310
│              SDC mode indicator              │
└────────────────────┬───────────────────────┘
                     │
                     ▼
┌────────────────────────────────────────────┐
│  Restore depth values of current block using depth │ ── S320
│       prediction values and depth residual    │
└────────────────────┬───────────────────────┘
                     │
                     ▼
          ┌─────────────┐
          │     End      │
          └─────────────┘
```

## FIG. 4

(a)

(b)

# FIG. 5

```
        ┌─────────────┐
        │    Start    │
        └──────┬──────┘
               │
               ▼
┌──────────────────────────────────────────┐
│   Extract absolute value of depth residual and   │──── S500
│      sign information of depth residual      │
└──────────────────┬───────────────────────┘
                   │
                   ▼
┌──────────────────────────────────────────────────┐
│ Derive depth residual of current block using absolute value of │──── S510
│   depth residual and sign information of depth residual    │
└─────────────────────┬────────────────────────────┘
                      │
                      ▼
              ┌─────────────┐
              │     End     │
              └─────────────┘
```

# FIG. 6

```
┌──────────────┐          ┌──────────────┐
│   Original   │          │    Depth     │
│    Depth     │          │  Prediction  │
│    Value     │          │    Value     │
└──────┬───────┘          └──────┬───────┘
       │                         │
       ▼ DC_orig                 ▼ DC_pred
   ┌───────┐                 ┌───────┐
   │  DLT  │                 │  DLT  │
   └───┬───┘                 └───┬───┘
       │                         │
       ▼ I_orig                  ▼ I_pred
       │            ⊖            │
       └────────────┬───────────┘
                    │
                    ▼ I_res
                    │
                    ▼
            DC_abs , DC_sign
```

## FIG. 7

<table>
<tr><td colspan="2">**INTERNATIONAL SEARCH REPORT**</td><td>International application No.<br><br>**PCT/KR2014/003078**</td></tr>
</table>

| A. | CLASSIFICATION OF SUBJECT MATTER |
|---|---|

*H04N 19/50(2014.01)i, H04N 13/00(2006.01)i*

According to International Patent Classification (IPC) or to both national classification and IPC

| B. | FIELDS SEARCHED |
|---|---|

Minimum documentation searched (classification system followed by classification symbols)
H04N 19/50; H04N 7/24; H04N 13/00; H04N 7/30; H04N 19/60; H04N 19/124

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: depth, residual, decoding, indicator, simplified depth coding (SDC)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2012-059841 A1 (KONINKLIJKE PHILIPS ELECTRONICS N.V.) 10 May 2012<br>See page 26, lines 16-30 and figures 8-9. | 1-8 |
| A | JAGER, F. "Simplified depth map intra coding with an optional depth lookup table". In: 3D Imaging (IC3D), 2012 International Conference. IEEE, 3-5 December 2012, pp. 1-4.<br>See pages 2-3 and figure 1. | 1-8 |
| A | KR 10-2012-0008323 A (KWANGWOON UNIVERSITY INDUSTRY-ACADEMIC COLLABORATION FOUNDATION CO., LTD. ) 30 January 2012<br>See paragraphs [0020]-[0034], [0046]-[0056] and figures 2, 13. | 1-8 |
| A | KR 10-2011-0017300 A (SAMSUNG ELECTRONICS CO., LTD.) 21 February 2011<br>See paragraphs [0053]-[0064], [0118]-[0122] and figure 15. | 1-8 |
| A | US 2012-0230421 A1 (CHEN, Ying et al.) 13 September 2012<br>See paragraphs [0080]-[0090], [0139]-[0143] and figures 3, 8. | 1-8 |

| ☐ | Further documents are listed in the continuation of Box C. | ☒ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 28 JULY 2014 (28.07.2014) | **28 JULY 2014 (28.07.2014)** |

| Name and mailing address of the ISA/KR<br>Korean Intellectual Property Office<br>Government Complex-Daejeon, 189 Seonsa-ro, Daejeon 302-701, Republic of Korea<br>Facsimile No. 82-42-472-7140 | Authorized officer<br><br><br>Telephone No. |
|---|---|

Form PCT/ISA/210 (second sheet) (July 2009)

INTERNATIONAL SEARCH REPORT
Information on patent family members

International application No.

**PCT/KR2014/003078**

| Patent document cited in search report | Publication date | Patent family member | Publication date |
|---|---|---|---|
| WO 2012-059841 A1 | 10/05/2012 | CN 103181171 A | 26/06/2013 |
| | | EP 2636222 A1 | 11/09/2013 |
| | | JP 2014-502443 A | 30/01/2014 |
| | | US 2013-0222377 A1 | 29/08/2013 |
| KR 10-2012-0008323 A | 30/01/2012 | NONE | |
| KR 10-2011-0017300 A | 21/02/2011 | CA 2768181 A1 | 17/02/2011 |
| | | CA 2815777 A1 | 17/02/2011 |
| | | CA 2815893 A1 | 17/02/2011 |
| | | CN 102484703 A | 30/05/2012 |
| | | CN 103220525 A | 24/07/2013 |
| | | CN 103220528 A | 24/07/2013 |
| | | EP 2449778 A2 | 09/05/2012 |
| | | EP 2629518 A2 | 21/08/2013 |
| | | EP 2629518 A3 | 18/12/2013 |
| | | EP 2629526 A2 | 21/08/2013 |
| | | EP 2629526 A3 | 18/12/2013 |
| | | JP 2013-179707 A | 09/09/2013 |
| | | JP 2013-214989 A | 17/10/2013 |
| | | JP 2013-502138 A | 17/01/2013 |
| | | KR 10-2013-0041038 A | 24/04/2013 |
| | | KR 10-2013-0041039 A | 24/04/2013 |
| | | US 2011-0038554 A1 | 17/02/2011 |
| | | US 2012-0106637 A1 | 03/05/2012 |
| | | US 2012-0236938 A1 | 20/09/2012 |
| | | US 2013-0064291 A1 | 14/03/2013 |
| | | US 2013-0336390 A1 | 19/12/2013 |
| | | US 2013-0336391 A1 | 19/12/2013 |
| | | US 2013-0336392 A1 | 19/12/2013 |
| | | US 8204320 B2 | 19/06/2012 |
| | | US 8311348 B2 | 13/11/2012 |
| | | US 8515190 B2 | 20/08/2013 |
| | | WO 2011-019234 A2 | 17/02/2011 |
| | | WO 2011-019234 A3 | 23/06/2011 |
| US 2012-0230421 A1 | 13/09/2012 | CN 103444177 A | 11/12/2013 |
| | | EP 2684361 A1 | 15/01/2014 |
| | | JP 2014-509160 A | 10/04/2014 |
| | | KR 10-2013-0129469 A | 28/11/2013 |
| | | TW 201244491 A | 01/11/2012 |
| | | WO 2012-122355 A1 | 13/09/2012 |

Form PCT/ISA/210 (patent family annex) (July 2009)